# EUROPEAN PATENT APPLICATION

(11) **EP 2 940 278 A1**
(43) Date of publication of application: **04.11.2015**
(21) Application number: 14179086.5
(22) Date of filing: 30.07.2014
(51) Int. Cl.: F02D 41/16

(54) **Ambient temperature calculating modeling method using distorted ambient temperature compensation**

(30) Priority: 25.11.2013 KR 20130143651
(71) Applicant: Hyundai Motor Company, Seoul 137-938 (KR)
(72) Inventor: Kim, Hee-Sup, 445-703 Hwaseong-si, Gyeonggi-do (KR); Park, Jong-Sung, 440-330 Suwon-si, Gyeonggi-do (KR)
(74) Representative: Viering, Jentschura & Partner Patent- und Rechtsanwälte

(57) **Abstract**

An ambient temperature determining modeling method using distorted ambient temperature compensation may include, (A) a distortion compensation factor applying step of applying a coolant temperature, an intake air temperature, an air volume, a vehicle speed, a soak time, and a gradient to ambient temperature determining modeling, (B) an ambient temperature learning prohibiting step of checking a "Hot Soak" condition and a "Long Idle" condition, and setting ambient temperature model learning prohibition when the "Hot Soak" condition and the "Long Idle" condition are satisfied at the same time, and (C) an ambient temperature distortion removing step of determining ambient temperature update conditions when the "Hot Soak" condition and the "Long Idle" condition are not satisfied at the same time, and adding the gradient to determine an ambient temperature.

## Description

### CROSS-REFERENCE TO RELATED APPLICATIONS

The present application claims priority to Korean Patent Application No. 10-2013-0143651, filed on November 25, 2013, the entire contents of which is incorporated herein for all purposes by this reference.

### BACKGROUND OF THE INVENTION

### Field of the Invention

Exemplary embodiments of the present invention relate to an ambient temperature calculating modeling method and, more particularly, to an ambient temperature calculating modeling method using distorted ambient temperature compensation, capable of reinforcing calculating factors of an ambient temperature calculating model to improve ambient temperature distortion occurring under various driving and environmental conditions.

### Description of Related Art

In general, ambient temperature modeling is a method of calculating an ambient temperature without using an ambient temperature measurement sensor, and is applied to gasoline engine systems having no ambient temperature measurement sensor. In particular, the ambient temperature modeling takes the place of a function of an ambient temperature sensor when the ambient temperature sensor gets out of order.

A value of the ambient temperature predicted in the ambient temperature modeling is used to control a target pressure of a variable low-pressure pump. An example of the variable low-pressure pump includes a variable low-pressure system of a gasoline direct injection (GDI) engine.

In the variable low-pressure system, an amount of consumption current of a fuel pump is minimized by adequate fuel supply according to a required flow rate of the engine. Thus, the variable low-pressure system may be favorable in the aspect of fuel economy compared to an invariable fuel pump. However, there is no alternative but to increase a possibility of vapor lock occurring at a superhigh temperature area or due to high-volatility fuel. The vapor lock refers to a phenomenon in which pressure transfer is weakened by generation of a characteristic of compressible fluid resulting from evaporation of a liquid, and supply of fluid is obstructed.

Therefore, the value of the ambient temperature predicted in the ambient temperature modeling is used for discrimination of the superhigh temperature and an input of a fuel tank model temperature with intent to prevent starting-off caused by the vapor lock of a fuel system.

For example, if it is determined that the low-pressure pump is operated on a superhigh temperature driving condition (the ambient temperature of 45°C or more) using the value of the ambient temperature predicted in the ambient temperature modeling, the low-pressure pump is controlled to be 5 bars. Thereby, it is possible to prevent the vapor lock occurring due to a rise of a low-pressure side fuel temperature. Further, the value of the ambient temperature is used for a fuel temperature model. Thereby, it is possible to prevent vapor occurring at a suction part due to a rise of a fuel temperature in a fuel tank caused by heat emitted from an exhaust pipe and a pump motor.

Further, the value of the ambient temperature predicted in the ambient temperature modeling can be used to control an increase in target revolutions per minute (RPM) of engine idle in order to increase output of an air conditioner compressor.

For example, if it is determined that the compressor is operated at a superhigh temperature area (the ambient temperature of 45°C or more) using the value of the ambient temperature predicted in the ambient temperature modeling, the RPM of the engine is increased to a target value in order to increase the output of the compressor when an air conditioner is operated. Thereby, it is possible to improve performance of the compressor.

To this end, in the ambient temperature modeling, among various input data input to an engine control unit (ECU), a coolant temperature, an intake air temperature, a vehicle speed, and an air volume are used as calculating factors. Especially, the coolant temperature or a value of model ambient temperature stored in a previous driving cycle according to a starting initial soak condition is set to an initial value of the ambient temperature modeling.

However, the ambient temperature modeling uses the vehicle speed and the air volume among the input data of the ECU for update learning of the set initial value. Thereby, a reflecting rate and update of the intake air temperature and the coolant temperature under a driving condition are determined. For this reason, distortion of the model ambient temperature is inevitably made severe by an error of learning carried out on specified conditions of a vehicle.

As an specific example, wrong learning of the ambient temperature model takes place in the early stage of re-driving due to an increase in intake air temperature when idle is left alone for a long time, wrong learning of the ambient temperature model takes place in the early stage of driving due to an increase in intake air temperature in the event of high-temperature restarting, or excessive deviation between a measured temperature and a model temperature according a change in altitude in the event of upgrade or downgrade driving takes place. Thereby, a variation in real ambient temperature according to a change in driving condition or altitude is not properly reflected, or excessive deviation according to a sharp change in temperature, for instance, between an ambient temperature (-30°C) on a wintertime garage mode and a measured ambient temperature (+25°C) takes place, and results in an excessive update time.

In this case, the distortion of the model ambient temperature caused by upward or downward learning is inevitable.

Particularly, in the distortion of the model ambient temperature caused by upward learning, the model ambient temperature is predicted to be too high, and thereby low fuel economy is caused by an increase in idle RPM and an increase in low-pressure side pressure. Further, in the distortion of the model ambient temperature caused by downward learning, the model ambient temperature is predicted to be lower than a measured result, and thereby a possibility of deteriorating supersurge cooling performance and a possibility of causing starting-off caused by the vapor lock of a fuel system are increased.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY

Various aspects of the present invention are directed to providing an ambient temperature calculating modeling method using distorted ambient temperature compensation, in which a distortion phenomenon of an ambient temperature calculated in the event of sustaining of an engine idle causing an increase in intake air temperature, high-temperature restarting, mountain driving during which the ambient temperature is sharply changed, or wintertime driving during which the ambient temperature is low is removed by further adding a soak time and a gradient (%) to calculating factors applied to ambient temperature modeling, and thereby calculating precision of an ambient temperature calculating model for which no ambient temperature measurement sensor is used is improved, and particularly, either performance of a variable low-pressure system using the calculated value of the ambient temperature calculating model as a target pressure or performance of an air conditioning system using the calculated value of the ambient temperature calculating model as a target RPM is maximized.

In this aspect of the present invention, an ambient temperature determining modeling method using distorted ambient temperature compensation may include steps of (A) a distortion compensation factor applying step of applying a coolant temperature, an intake air temperature, an air volume, a vehicle speed, a soak time, and a gradient to ambient temperature determining modeling, (B) an ambient temperature learning prohibiting step of checking a "Hot Soak" condition and a "Long Idle" condition, and setting ambient temperature model learning prohibition when the "Hot Soak" condition and the "Long Idle" condition are satisfied at the same time, and (C) an ambient temperature distortion removing step of determining ambient temperature update conditions when the "Hot Soak" condition and the "Long Idle" condition are not satisfied at the same time, and adding the gradient to determine an ambient temperature.

The "Hot Soak" condition is a difference between an intake air temperature stored just prior to starting-off and a current intake air temperature, and the "Long Idle" condition is a difference between an intake air temperature stored just before an engine enters idle and the current intake air temperature.

The ambient temperature distortion removing step is converted into an ambient temperature sustaining step when the ambient temperature update conditions are not satisfied.

The ambient temperature update conditions may include "the vehicle speed > Thrsh1," "the air volume > Thrsh2," and "(Vehicle Speed Coeff x Air Volume Coeff) > Thrsh3" while all conditions of the "Vehicle Speed > Thrsh1," the "Air Volume > Thrsh2," and the "(Vehicle Speed Coeff x Air Volume Coeff) > Thrsh3" are satisfied, and

wherein the Thrsh1, the Thrsh2, and the Thrsh3 are reference values when determined as thresholds.

The ambient temperature distortion removing step may include determining that the "Hot Soak" condition is not satisfied first, and determining that the "Long Idle" condition is not satisfied.

The ambient temperature distortion removing step may include (a) performing "Amb_k" determination using the vehicle speed and the air volume and "Grad_k" determination using the gradient, (b) checking whether or not the ambient temperature update conditions are satisfied, (c) determining the ambient temperature model using the "Amb_k" determination, the "Grad_k" determination, the coolant temperature, and the intake air temperature, (d) defining a final ambient temperature model using a determined minimum value of the ambient temperature model and a minimum of the intake air temperature, and (e) applying an intake air temperature update filter constant to the final ambient temperature model so as to be defined as a filter ambient temperature.

At the filter ambient temperature, the "Amb_k" determination is based on "Amb_k = Vehicle Speed Coefficient (Velocity Coeff) x Air Volume Coefficient (Air flux Coeff)," and the "Grad_k" determination is based on "Grad_k = Percent Gradient."

The determination of the ambient temperature model is defined as "Ambient Temperature Model Determination = f(Amb_k, Grad_k, Coolant Temperature, Intake Air Temperature)."

The final ambient temperature model is defined as Final Ambient Temperature Model = Minimum Value [Min(Ambient Temperature Model Intake Air Temperature)]."

The filter ambient temperature is defined by (e-1) detecting a change in intake air temperature when the vehicle speed is changed, (e-2) determining whether conditions of the change in the intake air temperature when the vehicle speed is changed are satisfied, (e-3) when the change in the intake air temperature when the vehicle speed is changed does not occur, applying K1 defined as a normal condition that is a summertime common driving condition to the intake air temperature update filter constant so as to be defined as "Filter Ambient Temperature = Ambient Temperature Before (1-k1)+k1* Final Ambient Temperature", (e-4) when the change in the intake air temperature when the vehicle speed is changed occurs, applying K2 defined as a driving condition after summertime garage soak to the intake air temperature update filter constant so as to be defined as "Filter Ambient Temperature = Ambient Temperature Before (1-k2) + k2 * Final Ambient Temperature."

The change in the intake air temperature when the vehicle speed is changed is detected under a condition of "Intake Air Temperature > 0" when "Vehicle Speed > 0."

The ambient temperature learning prohibiting step may include (a) detecting the intake air temperature, the air volume, the soak time, and the vehicle speed, and determining that the "Hot Soak" condition is "True," and a "Model Ambient Temperature Learning Prohibition" condition is "True" when "the soak time > Thrsh3" and "(Starting Intake Air Temperature - Previous DC Intake Air Temperature) > Thrsh4" are satisfied, (b) determining that the "Long Idle" condition is "True," and the "Model Ambient Temperature Learning Prohibition" condition is "True" when "the soak time > the Thrsh3" and "(the Starting Intake Air Temperature - the Previous DC Intake Air Temperature) > the Thrsh4" are not satisfied, and when "the vehicle speed < Thrsh5" and "(Init Intake Air Temperature - Current Intake Air Temperature) > the Thrsh4" are satisfied, (c) determining an accumulative air volume under a condition of "Vehicle Speed > the Thrsh5", and (d) determining that the "Model Ambient Temperature Learning Prohibition" condition is "True" when "Accumulative Air Volume < Thrsh6 is satisfied," and the Thrsh3, the Thrsh4, the Thrsh5, and the Thrsh6 are reference values when determined as thresholds.

When "the vehicle speed < the Thrsh5" and "(Init Intake Air Temperature - Current Intake Air Temperature) > the Thrsh4" are not satisfied in the step (b), or when "Accumulative Air Volume < the Thrsh6" is not satisfied in the step (d), a Normal Ambient Temperature Update" condition is determined as "True."

According to the present invention, a soak time and an upgrade road gradient are further included in the calculating factors of the ambient temperature modeling.

Thereby, model ambient temperature distortion caused by upward learning of the model ambient temperature predicted to be excessively high, and model ambient temperature distortion caused by downward learning of the model ambient temperature predicted to be excessively low are prevented.

Further, the model ambient temperature distortion caused by upward learning of the model ambient temperature predicted to be excessively high is compensated. Thereby, a rise in idle RPM resulting from deterioration of fuel economy and a rise in low-pressure side pressure are prevented. The model ambient temperature distortion caused by downward learning of the model ambient temperature predicted to be excessively low is compensated. Thereby, deterioration of supersurge cooling performance and starting-off caused by vapor lock of a fuel system are prevented.

Further, while idle is sustained, ambient temperature learning is prohibited when a change in intake air temperature exceeds a reference value, and then is restarted when an accumulative air volume at a vehicle speed exceeding a constant vehicle speed exceeds the reference value. Thereby, when the idle is left alone for a long time, wrong learning of a re-driving initial ambient temperature model caused by a rise in intake air temperature is prevented.

Further, ambient temperature learning is prohibited when a difference between a starting-off intake air temperature and a starting intake air temperature exceeds a reference value, and is restarted when the accumulative air volume at a vehicle speed exceeding a constant vehicle speed exceeds the reference value. Thereby, in the event of high-temperature starting, wrong learning of a driving initial ambient temperature model caused by a rise in intake air temperature is prevented

Further, when a model of an upgrade/downgrade condition is calculated after recognizing upgrade/downgrade of driving conditions (a vehicle speed and an air volume), a gradient condition is compensated to change a rate of the intake air temperature. Thereby, a change in real ambient temperature according to a change in driving condition and a change in altitude is properly reflected.

Further, final model ambient temperature update is fixed as "Final Model Ambient Temperature = Minimum Value [Min(Intake Air Temperature, Model Ambient Temperature)]." Thereby, excessive deviation according to a sharp change in temperature, for instance, between an ambient temperature (-30°C) on a wintertime garage mode and a measured ambient temperature (+25°C) is prevented, and an update time is reduced.

In addition, even in any case, distortion of the ambient temperature calculated in the ambient temperature calculating model is removed. Thereby, precision of the ambient temperature calculating model is improved, and particularly, either performance of a variable low-pressure pump using the calculated value of the ambient temperature calculating model as a target pressure or performance of an air conditioner compressor using the calculated value of the ambient temperature calculating model as a target RPM is maximized. Fuel economy and cooling performance under a superhigh temperature condition is greatly improved.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIGS. 1, 2A and 2B are flowcharts showing an operation of distorted ambient temperature compensation logic in which ambient temperature calculating modeling using distorted ambient temperature compensation according to an exemplary embodiment of the present invention is performed.

FIGS. 3A and 3B show a vehicle system to which the ambient temperature calculating modeling using distorted ambient temperature compensation according to an exemplary embodiment of the present invention is applied.

FIG. 4 is a flowchart showing an operation of ambient temperature learning prohibition condition logic implemented when distorted ambient temperature compensation logic according to an exemplary embodiment of the present invention is implemented.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

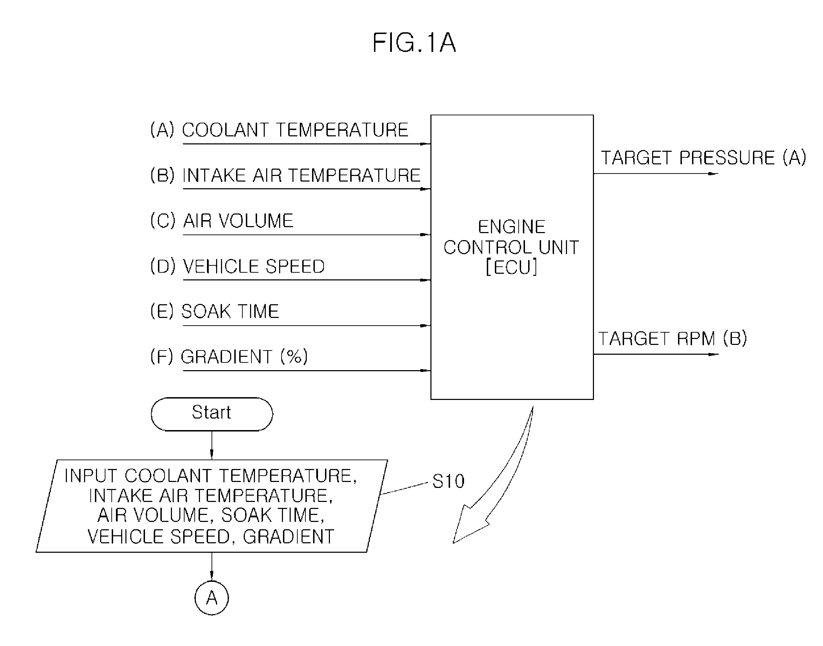

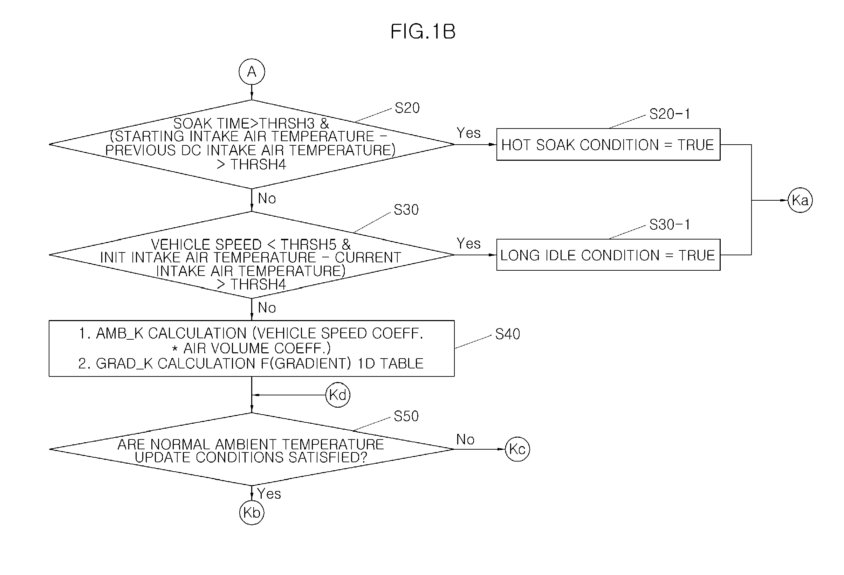

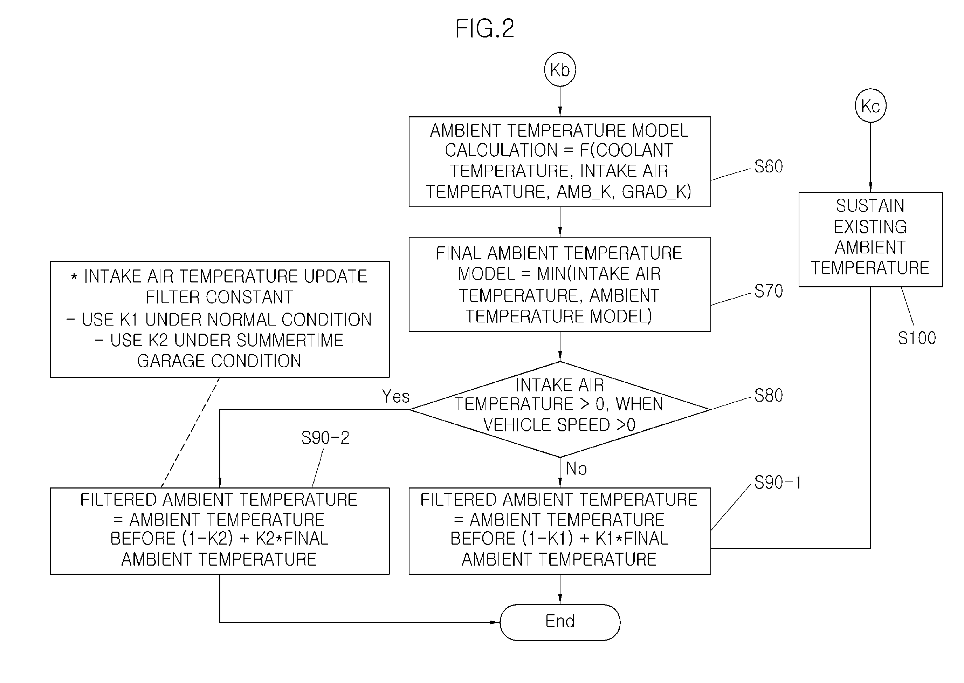

FIGS. 1, 2A and 2B are flowcharts showing an operation of distorted ambient temperature compensation logic in which ambient temperature calculating modeling using distorted ambient temperature compensation according to an exemplary embodiment of the present invention is performed.

In step S10, various calculating factors are applied to ambient temperature calculating modeling, and a calculating ambient temperature whose distortion is not present or is compensated in the ambient temperature calculating modeling using the calculating factors is output.

The calculating factors include (a) coolant temperature, (b) intake air temperature, (c) air volume, (d) vehicle speed, (e) soak time, and (f) gradient (%, road surface inclination).

Step S20 is a step of determining True or False of a "Hot Soak" condition. To this end, a "Hot Time" condition and an intake air temperature condition are applied. In detail, "Soak Time > Thrsh3," and "(Starting Intake Air Temperature - Previous DC Intake Air Temperature) > Thrsh4" are applied under an "AND" condition. Here, Thrsh3 and Thrsh4 are terms referring to a reference value as a threshold when a certain value is determined.

For example, the reference value in determining a temperature value is defined as "Temperature Thrsh." The reference value in determining a vehicle speed value is defined as Vehicle Speed Thrsh. Thus, "Soak Time > Thrsh3" is a reference value determining the soak time, and "(Starting Intake Air Temperature - Previous DC Intake Air Temperature) > Thrsh4" is a reference value determining the intake air temperature.

Here, the "Hot Soak" condition is a condition that is determined that, when an intake air temperature stored just before starting-off and a current intake air temperature are compared, the current intake air temperature is excessively increased compared to the stored intake air temperature. The driving can be prohibited until the intake air temperature is sufficiently lowered from the excessively increased current intake air temperature such as to be able to reflect the ambient temperature (update prohibition release condition of an accumulative air volume).

When the "Hot Soak" condition is determined in this way, it is possible to improve the distortion caused by the excessive increase of the value of the model ambient temperature due to the excessively increased intake air temperature compared to the measured ambient temperature during the driving under the condition that the intake air temperature is almost similar to the coolant temperature after soaking for 30 to 60 minutes after high-temperature driving.

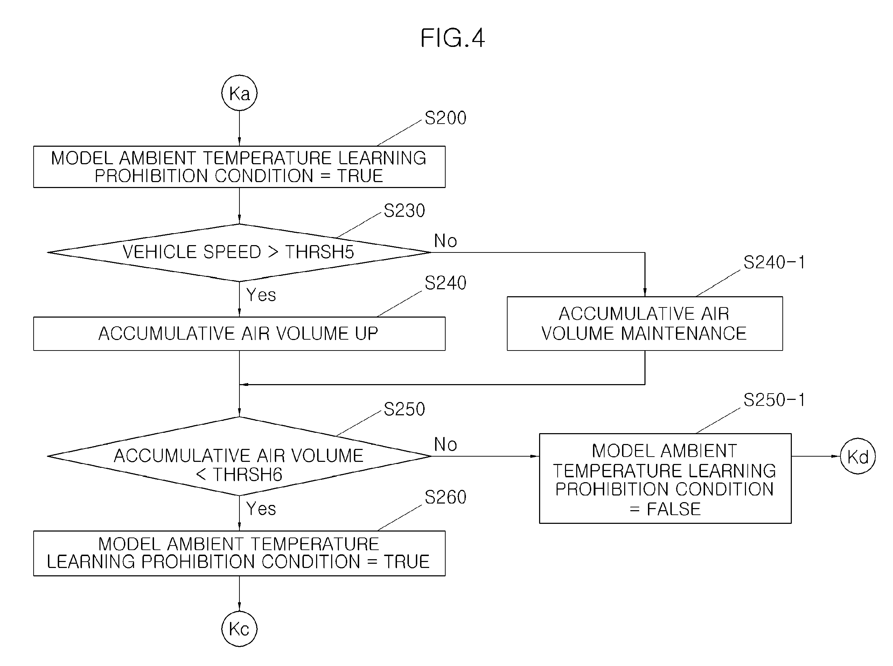

In step S20-1, "Soak Time > Thrsh3" and "(Starting Intake Air Temperature - Previous DC Intake Air Temperature) > Thrsh4" are satisfied by the checking of step S20. Thereby, the hot soak condition is determined as True. In this case, step S20-1 proceeds to step S200 (see FIG. 4).

In contrast, if "Soak Time > Thrsh3" and "(Starting Intake Air Temperature - Previous DC Intake Air Temperature) > Thrsh4" are not satisfied by the checking of step S20, step S20-1 proceeds to step S30. Thereby, True or False of a "Long Idle" condition that is in an idle state for a long time is determined.

To this end, "Vehicle Speed < Thrsh5" and "(Init Intake Air Temperature - Current Intake Air Temperature) > Thrsh4" are applied under an "AND" condition. Here, Thrsh4 and Thrsh5 are the aforementioned threshold, and Init Intake Air Temperature is an intake air temperature under the condition of "Vehicle Speed < Thrsh5," and is reset under the condition of "Vehicle Speed > Thrsh5."

Here, the "Long Idle" condition is a condition that, when the intake air temperature stored just prior to entering the idle and the current intake air temperature are compared, the current intake air temperature is excessively increased compared to the stored intake air temperature. The driving can be prohibited until the intake air temperature is sufficiently lowered from the excessively increased current intake air temperature such as to be able to reflect the ambient temperature (update prohibition release condition of an accumulative air volume).

When the "Long Idle" condition is determined in this way, it is possible to improve the distortion caused by the excessive increase of the value of the model ambient temperature due to the excessively increased intake air temperature compared to the measured ambient temperature during the driving under the condition that the intake air temperature is almost similar to the coolant temperature after soaking for 30 to 60 minutes after high-temperature driving.

In step S30-1, "Vehicle Speed < Thrsh5" and "(Init Intake Air Temperature - Current Intake Air Temperature) > Thrsh4" are satisfied together by the checking of step S30. Thereby, the "Long Idle" condition is determined as True. In this case, step S30-1 proceeds to step S200 (see FIG. 4).

In contrast, if "Vehicle Speed < Thrsh5" and "(Init Intake Air Temperature - Current Intake Air Temperature) > Thrsh4" are not satisfied by the checking of step S30, step 30-1 proceeds to step S40, and thus the ambient temperature is updated.

In step S40, "Grad_k" calculation is performed along with "Amb_k" calculation. Thereby, the ambient temperature is updated. Here, the "Amb_k" calculation uses a vehicle speed coefficient (Velocity Coeff) and an air volume coefficient (Air flux Coeff), and is performed by the product of the vehicle speed coefficient (Velocity Coeff) and the air volume coefficient (Air flux Coeff). This "Amb_k" calculation is identical to that of an existing ambient temperature calculating modeling logic. The "Grad_k" calculation uses a "f(Gradient) 1D" table. As a result, in the event of upgrade (climbing) or downgrade (descending) driving, the same heat transfer coefficient as in a flatland is not applied.

Step S50 is a step of checking ambient temperature update conditions. To this end, the ambient temperature update conditions are "Vehicle Speed > Thrsh1," Air Volume > Thrsh2," and "(Vehicle Speed Coeff x Air Volume Coeff) > Thrsh3," and are implemented when satisfied by the AND condition. Here, Thrsh2 and Thrsh3 are the aforementioned threshold.

Referring to FIG. 2, step S60 is a step of calculating the ambient temperature model. The ambient temperature model is calculated from "Ambient Temperature Model Calculation = f(Coolant Temperature, Intake Air Temperature, Amb_K, Grad_k)."

When "Grad_k" is further applied to the ambient temperature model calculation in this way, the coolant temperature and the intake air temperature are increased in the event of the upgrade (climbing) driving that is a high-load driving condition compared to a flatland driving condition. Thus, the model temperature is increased, whereas the measured ambient temperature resulting from a rise in altitude is lowered. The resultant distortion can be prevented. Further, the coolant temperature and the intake air temperature are lowered in the event of the downgrade (descending) driving that is a low-load driving condition compared to the flatland driving condition. Thus, the model temperature is lowered, whereas the measured ambient temperature is increased. The resultant distortion can be prevented.

Step S70 is a step of generating a final ambient temperature model from the result of calculating the ambient temperature model. To this end, Final Ambient Temperature Model = Minimum Value [Min(Intake Air Temperature, Model Ambient Temperature)] is applied.

Here, a minimum value (Min) of the intake air temperature and a minimum value (Min) of the ambient temperature model are applied. Thereby, when external driving is performed on wintertime conditions, it is possible to improve a phenomenon in which much update time is caused by a reversed phenomenon of the intake air temperature and the model temperature. Further, in the winter season in which the intake air temperature and the coolant temperature are almost equal to the ambient temperature under an "Overnight Soak" condition, it is possible to prevent the distortion increased by the external driving after socking at a garage.

Step S80 is a step of compensating the final ambient temperature model. To this end, in view of a change in vehicle speed and a change in intake air temperature, the condition of "Intake Air Temperature > 0" is applied when "Vehicle Speed > 0."

Step S90-1 is a step of filtering the ambient temperature to finally fix the ambient temperature when the condition of "Intake Air Temperature > 0" is not satisfied when "Vehicle Speed > 0." To this end, "Filtered Ambient Temperature = Ambient Temperature Before (1-k1) + k1 * Final Ambient Temperature" is applied. This is applied together as a result according to maintenance of the existing ambient temperature as in step S100. Here, K1 indicates an intake air temperature update filter constant used under a "Normal" condition. The "Normal" condition is a typical driving condition.

Step S90-2 is a step of filtering the ambient temperature to finally fix the ambient temperature when the condition of "Intake Air Temperature > 0" is satisfied when "Vehicle Speed > 0." To this end, "Filtered Ambient Temperature = Ambient Temperature Before (1-k2) + k2 * Final Ambient Temperature" is applied. Here, K2 indicates an intake air temperature update filter constant used under a summertime condition. The summertime condition is a driving condition after garage soak.

In this way, a filer deciding an update speed with K1 and K2 is used as a dual filter. Thereby, a characteristic of the ambient temperature whose update speed is slow because it is not radically changed is considered, and unlike the condition that the intake air temperature is converged or lowered when the vehicle speed is increased under a constant ambient temperature, learning is possible within a normal range of the ambient temperature distorted in the early stage on the condition after the garage soak in which an initial driving intake air temperature is increased.

Especially, this is used to be able to prevent cooling performance of an air conditioner and operability of a variable low-pressure system from being deteriorated by an increase in excessive error section in the event of the external driving at a garage of a superhigh temperature area.

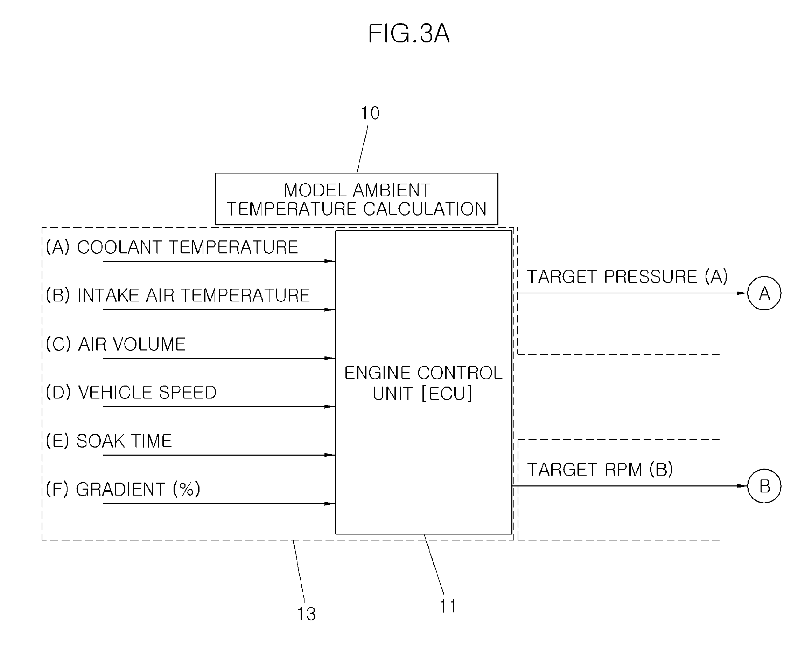

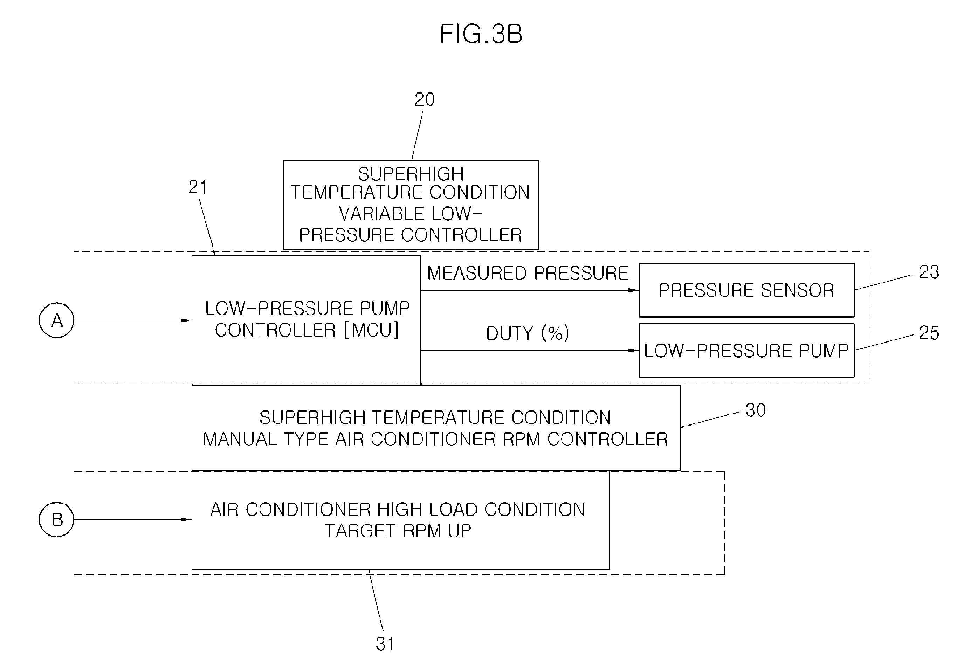

Meanwhile, FIGS. 3A and 3B show a vehicle system to which the ambient temperature calculating modeling using distorted ambient temperature compensation according to an exemplary embodiment of the present invention is applied.

As shown in FIG. 3 A and 3B, a model ambient temperature calculator 10 is made up of an engine control unit (ECU) 11, and input data 13. The input data 13 includes (a) coolant temperature, (b) intake air temperature, (c) air volume, (d) vehicle speed, (e) soak time, and (f) gradient (%, road surface inclination).

The ambient temperature calculating modeling using distorted ambient temperature compensation described in FIGS. 1,2A and 2B is applied to the ECU 11. Thereby, a distortion-free ambient temperature is calculated, and a target pressure A and a target RPM B of a variable low-pressure pump are calculated using the distortion-free ambient temperature.

The target pressure A of the variable low-pressure pump is provided to a superhigh temperature variable low-pressure controller 20. The superhigh temperature variable low-pressure controller 20 includes a low-pressure pump controller 21 controlling a low-pressure pump 25, and a pressure sensor 23 detecting a pressure of fuel discharged from the low-pressure pump 25.

Thus, the low-pressure pump controller 21 uses the target pressure A provided by the ECU 11 under the control of the low-pressure pump 25. Thereby, the starting-off phenomenon caused by vapor lock of a fuel system under a superhigh temperature driving condition (ambient temperature of 45° or more) can be prevented.

The target RPM B is provided to a superhigh temperature air conditioner controller 30. The superhigh temperature air conditioner controller 30 includes an air conditioner compressor 31. The superhigh temperature air conditioner controller 30 uses the target RPM B provided by the ECU 11 under the control of the air conditioner compressor 31. Thereby, it is possible to improve performance of the compressor at a superhigh temperature area (ambient temperature of 45° or more).

FIG. 4 is a flowchart showing an operation of ambient temperature learning prohibition condition logic implemented when distorted ambient temperature compensation logic according to an exemplary embodiment of the present invention is implemented.

In step S220, when "Hot Soak Condition = True," and when "Model Ambient Temperature Learning Prohibition Condition = True," model ambient temperature learning is stopped under a specific condition for a constant time.

In step S230, after a "Hot Soak" or "Long Idle" condition is applied, the "Model Ambient Temperature Learning Prohibition" condition is continuously determined. To the end, "Vehicle Speed > Thrsh5" is applied.

In step S230, it is recognized that an accumulative air volume is increased as in step S240 when "Vehicle Speed > Thrsh5" is satisfied, and it is recognized that the accumulative air volume is not changed as in step S240-1 when "Vehicle Speed > Thrsh5" is not satisfied.

In step S250, it is determined by a change in accumulative air volume whether or not "Hot Soak Condition Learning Prohibition" or "Long Idle Condition Learning Prohibition" is sustained. To this end, "Accumulative Air Volume < Thrsh6" is applied. Here, Thrsh6 is discriminated by an open amount of a throttle valve.

Step S250 proceeds to step S250-1 when "Accumulative Air Volume < Thrsh6" is not satisfied. Here, the "Model Open-Air Temperature Learning Prohibition" condition is determined as False. Then, step S250-1 proceeds to step S50, and the following steps are performed.

In contrast, in step S250, when "Accumulative Air Volume < Thrsh6" is satisfied, the "Model Ambient Temperature Learning Prohibition" condition is determined as True as in S260. Thereby, the "Model Ambient Temperature Learning Prohibition" condition is sustained.

As described above, in the ambient temperature calculating modeling method using distorted ambient temperature compensation according to an exemplary embodiment of the present invention, the distortion phenomenon of the ambient temperature calculated in the event of sustaining of the engine idle causing an increase in intake air temperature, high-temperature restarting, mountain driving during which the ambient temperature is sharply changed, or wintertime driving during which the ambient temperature is low is removed by further adding the soak time and the gradient (%) to the calculating factors applied to the ambient temperature modeling. Thereby, calculating precision of the ambient temperature calculating model for which no ambient temperature measurement sensor is used is improved. In particular, either the performance of the variable low-pressure system using the calculated value of the ambient temperature calculating model as the target pressure or the performance of the air conditioning system using the calculated value of the ambient temperature calculating model as the target RPM can be maximized.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. An ambient temperature determining modeling method using distorted ambient temperature compensation comprising steps of:
(A) a distortion compensation factor applying step of applying a coolant temperature, an intake air temperature, an air volume, a vehicle speed, a soak time, and a gradient to ambient temperature determining modeling;
(B) an ambient temperature learning prohibiting step of checking a "Hot Soak" condition and a "Long Idle" condition, and setting ambient temperature model learning prohibition when the "Hot Soak" condition and the "Long Idle" condition are satisfied at the same time; and
(C) an ambient temperature distortion removing step of determining ambient temperature update conditions when the "Hot Soak" condition and the "Long Idle" condition are not satisfied at the same time, and adding the gradient to determine an ambient temperature.

2. The ambient temperature determining modeling method of claim 1,
wherein the "Hot Soak" condition is a difference between an intake air temperature stored just prior to starting-off and a current intake air temperature, and the "Long Idle" condition is a difference between an intake air temperature stored just before an engine enters idle and the current intake air temperature.

3. The ambient temperature determining modeling method of claim 1,
wherein the ambient temperature distortion removing step is converted into an ambient temperature sustaining step when the ambient temperature update conditions are not satisfied.

4. The ambient temperature determining modeling method of claim 3,
wherein the ambient temperature update conditions include "the vehicle speed > Thrsh1," "the air volume > Thrsh2," and "(Vehicle Speed Coeff x Air Volume Coeff) > Thrsh3" while all conditions of the "Vehicle Speed > Thrsh1," the "Air Volume > Thrsh2," and the "(Vehicle Speed Coeff x Air Volume Coeff) > Thrsh3" are satisfied, and
wherein the Thrsh1, the Thrsh2, and the Thrsh3 are reference values when determined as thresholds.

5. The ambient temperature determining modeling method of claim 1,
wherein the ambient temperature distortion removing step includes determining that the "Hot Soak" condition is not satisfied first, and determining that the "Long Idle" condition is not satisfied.

6. The ambient temperature determining modeling method of claim 1,
wherein the ambient temperature distortion removing step includes:
(a) performing "Amb_k" determination using the vehicle speed and the air volume and "Grad_k" determination using the gradient;
(b) checking whether or not the ambient temperature update conditions are satisfied;
(c) determining the ambient temperature model using the "Amb_k" determination, the "Grad_k" determination, the coolant temperature, and the intake air temperature;
(d) defining a final ambient temperature model using a determined minimum value of the ambient temperature model and a minimum of the intake air temperature; and
(e) applying an intake air temperature update filter constant to the final ambient temperature model so as to be defined as a filter ambient temperature.

7. The ambient temperature determining modeling method of claim 6, wherein, at the filter ambient temperature, the "Amb_k" determination is based on "Amb_k = Vehicle Speed Coefficient (Velocity Coeff) x Air Volume Coefficient (Air flux Coeff)," and the "Grad_k" determination is based on "Grad_k = Percent Gradient."

8. The ambient temperature determining modeling method of claim 6,
wherein the determination of the ambient temperature model is defined as "Ambient Temperature Model Determination = f(Amb_k, Grad_k, Coolant Temperature, Intake Air Temperature)."

9. The ambient temperature determining modeling method of claim 6,
wherein the final ambient temperature model is defined as Final Ambient Temperature Model = Minimum Value [Min(Ambient Temperature Model Intake Air Temperature)]."

10. The ambient temperature determining modeling method of claim 6,
wherein the filter ambient temperature is defined by:
(e-1) detecting a change in intake air temperature when the vehicle speed is changed;
(e-2) determining whether conditions of the change in the intake air temperature when the vehicle speed is changed are satisfied;
(e-3) when the change in the intake air temperature when the vehicle speed is changed does not occur, applying K1 defined as a normal condition that is a summertime common driving condition to the intake air temperature update filter constant so as to be defined as "Filter Ambient Temperature = Ambient Temperature Before (1-k1) + k1 * Final Ambient Temperature";
(e-4) when the change in the intake air temperature when the vehicle speed is changed occurs, applying K2 defined as a driving condition after summertime garage soak to the intake air temperature update filter constant so as to be defined as "Filter Ambient Temperature = Ambient Temperature Before (1-k2) + k2 * Final Ambient Temperature."

11. The ambient temperature determining modeling method of claim 10,
wherein the change in the intake air temperature when the vehicle speed is changed is detected under a condition of "Intake Air Temperature > 0" when "Vehicle Speed > 0."

12. The ambient temperature determining modeling method of claim 1, wherein the ambient temperature learning prohibiting step includes:
(a) detecting the intake air temperature, the air volume, the soak time, and the vehicle speed, and determining that the "Hot Soak" condition is "True," and a "Model Ambient Temperature Learning Prohibition" condition is "True" when "the soak time > Thrsh3" and "(Starting Intake Air Temperature - Previous DC Intake Air Temperature) > Thrsh4" are satisfied;
(b) determining that the "Long Idle" condition is "True," and the "Model Ambient Temperature Learning Prohibition" condition is "True" when "the soak time > the Thrsh3" and "(the Starting Intake Air Temperature - the Previous DC Intake Air Temperature) > the Thrsh4" are not satisfied, and when "the vehicle speed < Thrsh5" and "(Init Intake Air Temperature - Current Intake Air Temperature) > the Thrsh4" are satisfied;
(c) determining an accumulative air volume under a condition of "Vehicle Speed
> the Thresh5"; and
(d) determining that the "Model Ambient Temperature Learning Prohibition" condition is "True" when "Accumulative Air Volume < Thrsh6 is satisfied," and the Thrsh3, the Thrsh4, the Thrsh5, and the Thrsh6 are reference values when determined as thresholds.

13. The ambient temperature determining modeling method of claim 12, wherein, when "the vehicle speed < the Thrsh5" and "(Init Intake Air Temperature - Current Intake Air Temperature) > the Thrsh4" are not satisfied in the step (b), or when "Accumulative Air Volume < the Thrsh6" is not satisfied in the step (d), a Normal Ambient Temperature Update" condition is determined as "True."
